# EUROPEAN PATENT SPECIFICATION

(11) **EP 3 274 625 B1**
(45) Date of publication and mention of the grant of the patent: **30.12.2020**
(21) Application number: 16769650.9
(22) Date of filing: 24.03.2016
(51) Int. Cl.: F21V 17/10, F21V 17/16, F21S 2/00, F21S 8/00

(54) **BOLT-LESS INSET LIGHT FIXTURE & BASE**
LEUCHTENHALTERUNG UND -SOCKEL MIT SCHRAUBENLOSEM EINSATZ
BASE ET LUMINAIRE ENCASTRÉS SANS BOULON

(30) Priority: 24.03.2015 US 201562137283 P
(43) Date of publication of application: 31.01.2018
(73) Proprietor: Eaton Intelligent Power Limited, Dublin 4 (IE)
(72) Inventor: SCHNEIDER, John, Brian, West Springfield, MA 01089 (US); BLONDIN, Sean, Michael, East Granby, CT 06026 (US); RAKOWSKI, Philip, Edward, Somers, CT 06071 (US)
(74) Representative: BRP Renaud & Partner mbB Rechtsanwälte Patentanwälte Steuerberater
(86) International application number: PCT/US2016/023887
(87) International publication number: WO 2016/154374

(56) References cited:
- EP-A1- 1 805 454
- WO-A1-2010/146509
- WO-A1-2010/146513
- DE-A1-102012 005 539
- JP-A- 2010 512 008
- KR-B1- 101 174 641
- US-A1- 2010 127 637
- US-A1- 2013 021 808
- US-A1- 2013 051 006
- US-B1- 6 406 162
- US-B1- 6 669 351

## Description

### FIELD

The subject application relates to an illumination assembly that includes a light fixture and a base. More particularly, a boltless illumination assembly is provided that includes a light fixture configured to attach to a base without bolts.

### BACKGROUND

Illumination assemblies including light fixtures and bases can be used in a variety of applications to provide various forms of lighting. For example, with respect to airports or other aircraft landing or departure areas, light fixtures are employed to provide general lighting for visibility, as well as to assist with direction and location such as approach and navigation aids, airfield guidance signs, runway and taxiway lights, elevated runway edge lighting, elevated threshold and end lighting, and heliport perimeter lighting. There are also several other applications where illumination from such an assembly is desired.

Attention is drawn to WO 2010 146 513 A1, which shows an illumination device comprising at least one light emitting device, an internal power source, an electrical interface for electrically connecting said illumination device to an external power supply, a thermal interface for thermally connecting said illumination device to an external heat sink, and a circuitry for operating said illumination device in first and second modes. Furthermore, WO 2006 040 790 A1 relates to a lighting device for inter alia road surface mounting having a light fixture comprising a housing, the housing having protrusions extending outward from the housing, and a base comprising respective keyed openings for receiving the protrusions to create a bayonet-type joint between the housing and the base.

### SUMMARY

In accordance with the present invention, an illumination assembly for an airfield as set forth in claim 1 is provided. Further embodiments are inter alia disclosed in the dependent claims. The following presents a simplified summary of the disclosure in order to provide a basic understanding of some example aspects described in the detailed description.

In accordance with an aspect, an illumination assembly includes a light fixture having a housing and at least one ring protrusion extending outward from the housing. The illumination assembly further includes a base having a groove configured to receive a housing ring. The at least one ring protrusion is configured to contact the housing ring to attach the light fixture to the base.

### BRIEF DESCRIPTION OF THE DRAWING FIGURES

Fig. 1 is an illustration of an illumination assembly including an elevated light fixture and a base in accordance with examples of the prior art;
Fig. 2 is an illustration of an illumination assembly including an inset light fixture and a base in accordance with examples of the prior art;
Fig. 3 is an illustration of an exploded view of an example illumination assembly including an inset light fixture and a base in accordance with examples described herein;
Fig. 4 is an illustration of an unassembled view of an example illumination assembly including an inset light fixture and a base in accordance with examples described herein;
Fig. 5 is an illustration of an assembled view of an example illumination assembly including an inset light fixture and a base in accordance with examples described herein;
Fig. 6 is an illustration of a top view of an example illumination assembly including an inset light fixture in accordance with examples described herein;
Fig. 7 is an illustration of a side view of an example illumination assembly including an inset light fixture in accordance with examples described herein;
Fig. 8 is an illustration of a cutaway view of an example illumination assembly including a base in accordance with examples described herein;
Fig. 9 is an illustration of a bottom view of an example illumination assembly including an inset light fixture in accordance with examples described herein; and
Fig. 10 is an illustration of a cross-sectional view of an example illumination assembly including an inset light fixture and a base in accordance with examples described herein.
Fig. 11 is an illustration of a cross-sectional view of an example illumination assembly including an inset light fixture and a base in accordance with examples described herein.

### DETAILED DESCRIPTION

The following presents a description of the disclosure; however, aspects may be embodied in many different forms and should not be construed as limited to the embodiments set forth herein. Furthermore, the following examples may be provided alone or in combination with one or any combination of the examples discussed herein. Still further, in the drawings, the same reference numerals can be employed for designating the same elements.

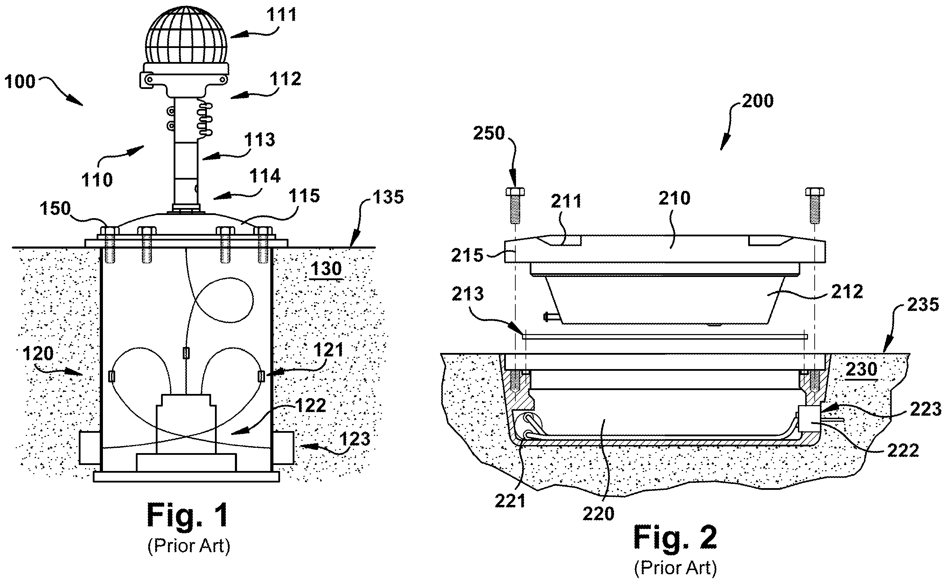

As shown in FIG. 1, an elevated illumination assembly 100 of the prior art includes an elevated light fixture 110, a base 120, an outer globe 111, an elevated optical assembly 112, a shaft 113, an elevated housing 115, a frangible coupling 114, at least one bolt 150 that attaches the elevated housing 115 to the base 120. The base 120 can include a connector kit 121, a transformer 122, and a conduit entrance 123. As shown, the base 120 is arranged below grade (e.g. installed in the ground or pavement 130 below a surface 135). Likewise, at least a portion of the elevated light fixture 110 extends above the surface 135 to provide elevated illumination.

As shown in FIG. 2, an inset illumination assembly 200 of the prior art includes an inset light fixture 210, a base 220, an outer lens 211, an inset optical assembly 212, an inset housing 215, at least one bolt 250 that attaches the inset housing 215 to the base 220, and a gasket 213. The base 220 can include a connector kit 221, a transformer 222, and a conduit entrance 223. As shown, the base 220 is arranged below grade (e.g. installed in the ground or pavement 230 below a surface 235). Likewise, at least a portion of the inset light fixture 210 extends below the surface 235 to provide inset illumination.

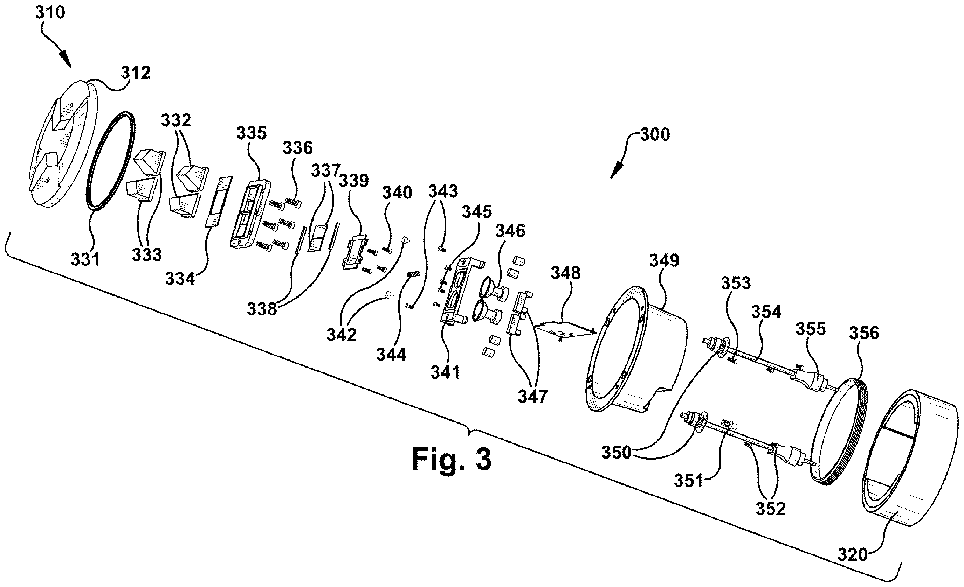

FIG. 3 illustrates an exploded view of a bolt-free or boltless illumination assembly 300 in accordance with examples of the disclosure. The term "boltless" as used herein is to be understood to refer to a light fixture configured to attach to a base securely without the presence or use of bolts. It should be understood that the light fixture and/or the base may include bolts or other fasteners internal to the light fixture (e.g. as part of an optical assembly) and internal to the base (e.g. as part of the wiring assembly) without departing from the scope of the disclosure. A boltless connection between the light fixture and the base refers to the absence of external bolts (e.g. bolts 150 and 250 of the prior art) that connect the light fixture to the base. Thus, a boltless illumination assembly may, in some examples, include other internal or external bolts used for purposes other than connecting the light fixture to the base. By providing a bolt-free connection between the light fixture and the base, maintenance and inspection efforts such as installing the bolts, checking the tightness of the bolts, and removing the bolts to service the illumination assembly can be reduced or eliminated. A boltless illumination assembly in accordance with examples of the disclosure whereby the light fixture is configured to be connected to the base without external bolts is desirable.

The boltless illumination assembly 300 can include an inset light fixture 310 and a base 320. Moreover, although the boltless illumination assembly 300 is illustrated with an inset light fixture 310 configured to attach to a base 320, it is to be understood that the disclosed features, either alone or in combination, could be applied in a same or similar manner to an elevated light fixture (not shown) configured to attach to a base, including the base 320.

The inset light fixture 310 can be an incandescent light fixture that includes any one or more of the following components, either alone or in combination, including a housing 312, a light fixture gasket (e.g. O-ring) 331 configured to provide a seal between the housing 312 and the base 320, one or more lens boots 332, one or more lenses (or prism) 333, a lens gasket 334 configured to provide a seal around the one or more lens boots 332 and the one or more lenses 333, an optic support bracket 335, optic support bracket fasteners 336, one or more filters 337, one or more filter boots 338, a filter holding bracket 339, filter holding bracket fasteners 340, a lamp bracket 341, one or more optic bracket isolators 342, lamp bracket attachment fasteners 343, a lamp bracket gasket 344, lamp bracket rivets 345, at least one lamp 346 (e.g. a light bulb, LED, or other illuminating filament), one or more springs 347, a baffle 348 configured to serve as a divider between two or more of the at least one lamp 346, a housing or bottom cover 349 in which the components can be housed, at least one lead assembly 350, a pressure fitting 351, one or more connector fasteners 352, wiring 354 (e.g., a power lead cable) connected with a wiring connector 355 to provide an electric current to the lamp 346, and a ground screw 353 configured to provide an electrical ground connection from the wiring 354 or other electrical components (e.g. transistors). However, in other examples, the inset light fixture 310 can be an LED light fixture having the housing 312 and components such as those discussed above and/or other components such as, for example, LED circuit boards, LED heat-sinks, reflectors and/or secondary lenses, prism heaters, power supplies, and EMI attenuating ferrites. The inset light fixture 310 can be any light fixture having a housing and other lighting components.

The wiring connector 355 can connect to an electrical source (not shown) and a cover or housing gasket (e.g. O-ring) 356 can be configured to provide a seal between the bottom cover 349 and the base 320 to create a water tight seal to prevent water or other debris from entering the base 320. In other examples, the boltless illumination assembly 300 can include an independent power supply (e.g. one or more batteries or other power sources), a power supply bracket, a prism heater, a housing heater, or any other illumination assembly component including those not explicitly disclosed herein.

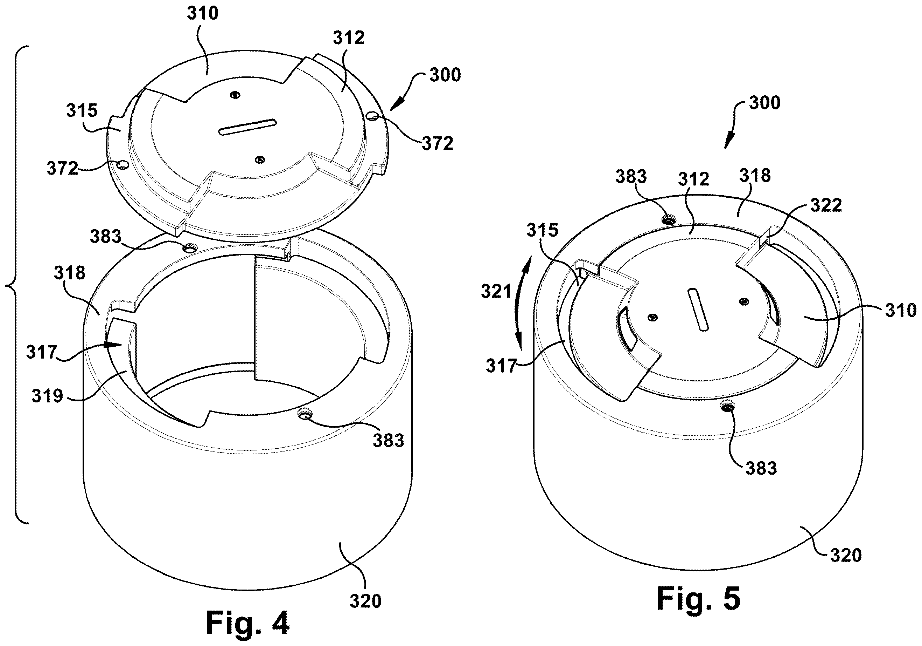

Turning to FIGS. 4 and 5, the boltless illumination assembly 300 is shown with some components removed for clarity. In FIG. 4, the boltless illumination assembly 300 is shown in an unassembled state wherein the inset light fixture 310 is configured to attach to the base 320 without bolts. The base 320 can be a cylindrical structure with a closed bottom end, an open upper end, and an upper rim 318 that projects radially inward from the upper end of the base 320. However, other non-cylindrical shapes and configurations are possible in other embodiments.

The inset light fixture 310 can include the housing 312 and at least one protrusion 315. The at least one protrusion 315 can be arranged around an outer periphery or perimeter of the housing 312 and can project radially outward from the housing 312. As shown, the at least one protrusion 315 can be spaced regularly around the housing 312. In other examples one or more of the at least one protrusion 315 can be spaced at regular or irregular intervals around the housing 312. When more than one at least one protrusion 315 is provided, each of the at least one protrusions 315 can have the same or similar structure or different structure. The at least one protrusion 315 is configured to mate with a corresponding at least one keyed opening 317 of the base 320. The corresponding at least one keyed opening 317 can include a ledge 319 spaced at a distance axially below the upper rim 318 of the base 320.

As shown in FIG. 5, the at least one protrusion 315 can be configured to mate or engage the corresponding at least one keyed opening 317. More specifically, the inset light fixture 310 can engage the base 320 such that a portion of the inset light fixture 310 (e.g., the housing 312 and/or the at least one protrusion 315) contacts (e.g., rests on) the ledge 319. The inset light fixture 310 can then be rotated in a first direction (e.g., clockwise or counter-clockwise, as indicated by double-arrow 321) until the at least one protrusion 315 is partially or fully located under the upper rim 318 of the base 320. A portion of the upper rim 318 (e.g., an underside of the upper rim 318) of the base 320 can contact a portion of the at least one protrusion 315 (e.g., an upper surface of the at least one protrusion 315) and hold the inset light fixture 310 in boltless connection with the base 320.

A rotation limiter formed as a tab or stop 322 can be arranged at a location within or adjacent to the at least one keyed opening 317 to contact the at least one protrusion 315 and stop a rotation movement of the housing 312 and the inset light fixture 310 within the base 320. To remove the inset light fixture 310 from the base 320 (e.g., to service or replace any one or more components of the boltless illumination assembly 300), a user can rotate the housing 312 in a second direction (e.g., clockwise or counter-clockwise, as indicated by double-arrow 321) that is opposite the first direction, wherein the at least one protrusion 315 disengages from contacting the underside of the upper rim 318 of the base 320 and is positioned in the corresponding at least one keyed opening 317 where the inset light fixture 310 can be lifted and separated from the base 320.

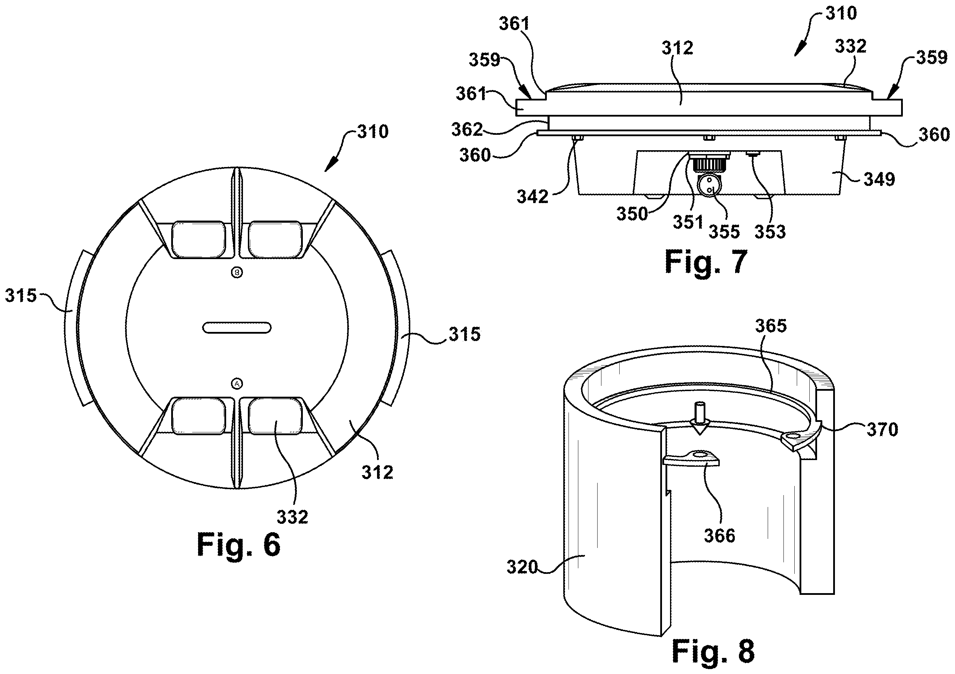

A top view of the inset light fixture 310 is shown in FIG. 6, including the at least one protrusion 315 extending from the housing 312 and configured to engage the corresponding at least one keyed opening 317 of the base 320. As shown in FIG. 6, the one or more lenses 332 are arranged in the inset light fixture 310. The one or more lenses 332 as well as any of the filters 337 and filter boots 338 (FIG. 3) can be configured to be provided in any one or more omnidirectional, unidirectional, bidirectional, or other directional illumination assembly including directions not explicitly listed, can include any color (e.g. red, green, yellow, orange, blue, black, purple, clear, white, green, or any combination thereof, including colors not explicitly listed), and can be configured to display any lighting pattern (e.g. flashing, strobe, constant illumination, or any combination thereof, including light patterns not explicitly listed).

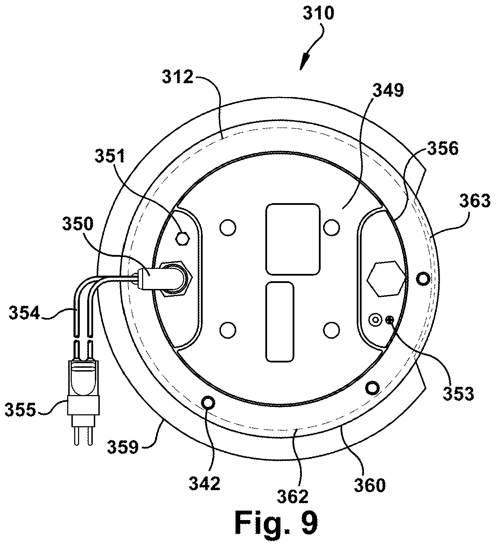

Turning to FIGS. 7-9, another embodiment of the inset light fixture 310 is shown, including the one or more lenses 332, the housing 312, the bottom cover 349, the optic bracket isolators 342, at least one lead assembly 350, the pressure fitting 351, the ground screw 353, and the wiring connector 355. In addition, the inset light fixture 310 includes at least one ring protrusion (e.g. a first ring protrusion 359 and/or second ring protrusion 360) that extends radially outward from the housing 312 and is configured to engage a corresponding housing ring 365 (e.g. a C-shaped retaining ring), shown in FIG. 8. Each ring protrusion can extend completely or partially around the perimeter of the housing 312. As shown in FIG. 9, the first and second ring protrusions 359, 360 in the present example extend completely around the perimeter of the housing 312. The first ring protrusion 369 extends around an upper portion 361 of the housing 312 and the second ring protrusion 360 is spaced axially below the first ring protrusion 359 such that an intermediate portion 362 of the housing 312 is located between the first ring protrusion 359 and the second ring protrusion 360. Moreover, the first ring protrusion 359 includes a cutout portion 363. It is to be understood that although the first ring protrusion 359 and the second ring protrusion 360 are both illustrated in FIGS. 7 & 9, in some examples, the inset light fixture 310 may include only one of the first ring protrusion 359 and the second ring protrusion 360.

As shown in FIG. 8, (with a portion of the base 320 cutaway for clarity), the base 320 can include a ring groove or bore 370 within which the housing ring 365 is configured to fit. The housing ring 365 can include at least one aperture 366 configured to permit engagement with a tool (e.g. pliers) by which the housing ring 365 can be squeezed to decrease a diameter of the housing ring 365. By decreasing a diameter of the housing ring 365, the housing ring 365 can be removed from the corresponding ring groove or bore 370 of the base 320.

In one example, while the housing ring 365 is removed from the base 320, the inset light fixture 310 can be placed into the base 320 such that the first ring protrusion 359 is arranged below the bore 370. A portion of the inset light fixture 310 (e.g., a lower surface of the first or second ring protrusions 359, 360) can rest against a ledge or other structure within the base 320 to hold the inset light fixture 310 in position within the base 320. The housing ring 365 can then be inserted into the bore 370 above the first ring protrusion 359 to retain the inset light fixture 310 within the base 320. In particular, an upward facing surface of the first ring protrusion 359 can abut against and contact the housing ring 365 to hold the inset light fixture 310 within the base 320. To remove the inset light fixture 310, the housing ring 365 can be squeezed together and removed from the bore 307 such that the housing ring 365 is no longer above the first ring protrusion 359 and the inset light fixture 310 can then be removed (e.g. lifted off of the ledge or other structure within the base 320 on which the inset light fixture 310 is positioned). As shown, the light emitting component (e.g. bulb or lamp 346 and one or more lenses 332) of the inset light fixture 310 can be arranged above the housing ring 365 and the first ring protrusion 359.

In another example, before the inset light fixture 310 is inserted into the base 320, the housing ring 365 can be installed around the intermediate portion 362 of the housing 312 between the first and second ring projections 359, 360. The intermediate portion 362 is configured to form a captive area to receive the housing ring 365. Moreover, the outer diameter of the intermediate portion 362 is smaller than the inner diameter of the housing ring 365 to permit the housing ring 365 to be squeezed around the intermediate portion 362. Furthermore, the cutout 363 in the first ring protrusion 359 can permit a tool to access the aperture(s) 366 of the housing ring 365 to squeeze the housing ring 365. While the housing ring 365 is in a squeezed state, the inset light fixture 310 can be placed into the base 320 such that the second ring protrusion 360 is arranged below the bore 370 and the first ring protrusion 359 is arranged above the bore 370. The housing ring 365 can then be released/snapped into the groove or bore 370, thereby retaining the inset light fixture 310 and preventing removal without a proper tool. The light emitting component (e.g. bulb or lamp 346 and one or more lenses 332) of the inset light fixture 310 can be arranged above the housing ring 365 and the second ring protrusion 360. The housing ring 365 thus engages the corresponding ring groove or bore 370 of the base 320 and also contacts the second ring protrusion 360 to connect the inset light fixture 310 to the base 320 without bolts.

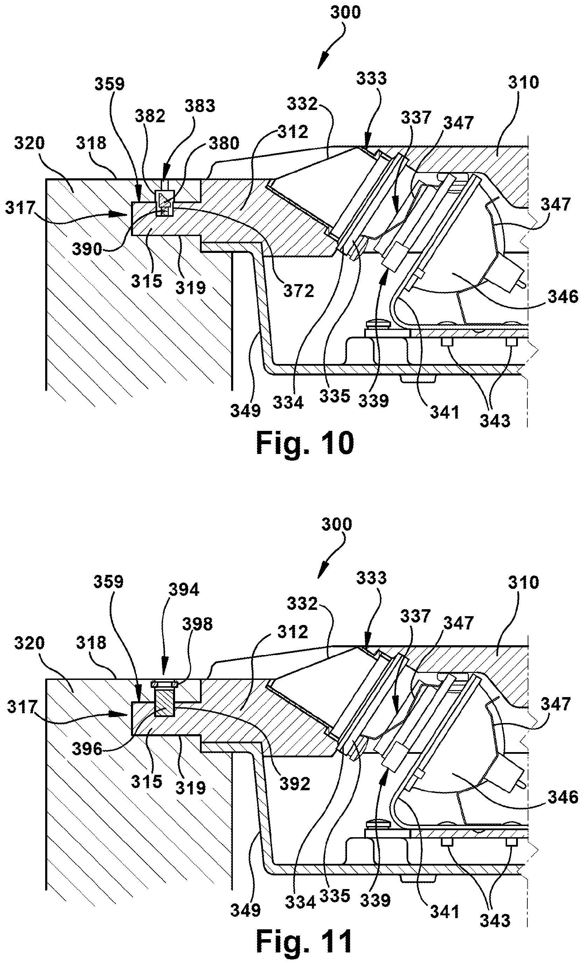

In some examples, the boltless illumination assembly 300 can include structure that can prevent rotation of the inset light fixture 310 relative to the base 320 when the inset light fixture 310 is installed on the base 320. For instance, FIG. 10 shows a cross-section view of the boltless illumination assembly 300 that includes the at least one protrusion 315 and corresponding at least one keyed opening 317 described above. The inset light fixture 310 can include one or more recesses 372 (also shown in FIGS. 4 & 5) that can align with one or more corresponding recesses 382 in the base 320 when the inset light fixture 310 is connected to the base 320. In the illustrated embodiment, the recesses 372 in the light fixture 310 are provided in the at least one protrusion 315 while the recesses 382 in the base 320 are provided in the upper rim 318 of the base 315. However, the recesses 372, 382 can be provided in other portions of the light fixture 310 and base 320 in other embodiments. The boltless illumination assembly 300 can further include a movable pin 380 within each recess 372 in the light fixture 310 and a spring 390 configured to displace the pin 380 into the corresponding recess 382 in the base 320, thereby inhibiting rotation of the inset light fixture 310 relative to the base 320. A tool can be inserted into a corresponding access aperture 383 (also shown in FIGS. 4 and 5) in the upper rim 318 of the base 320 to depress the pin 380 against a biasing force of the spring 390 until the pin 380 is below and no longer within the recess 382, thereby unlocking the inset light fixture 310 from the base 320. The above described rotational movement of the inset light fixture 310 can then be used to separate the light fixture from the base 320.

FIG. 11 shows another embodiment wherein the inset light fixture 310 includes one or more recesses 392 (also shown in FIGS. 4 & 5) that can align with one or more corresponding apertures 394 in the base 320 when the inset light fixture 310 is connected to the base 320. In the illustrated embodiment, the recesses 392 in the light fixture 310 are provided in the at least one protrusion 315 while the apertures 394 in the base 320 are provided in the upper rim 318 of the base 315. However, the recesses 392 and apertures 394 can be provided in other portions of the light fixture 310 and base 320 in other embodiments. The boltless illumination assembly 300 can further include one or more pins 396 that can be inserted through each aperture 394 and received within its corresponding recess 392, thereby inhibiting rotation of the inset light fixture 310 relative to the base 320. In some examples, the boltless illumination assembly 300 can further a retainer ring 398 that can be installed within each aperture 394 to prevent its corresponding pin 396 from being removed. To unlock the inset light fixture 310 and base 320, the retainer rings 398 can be removed along with the pins 396 to thereby permit rotation of the inset light fixture 310 relative to the base 320.

It is to be understood that although the locking structure shown in FIGS. 10 and 11 is used with embodiments of the boltless illumination assembly 300 that include the at least one protrusion 315 and corresponding at least one keyed opening 317, the locking structure shown in FIGS. 10 and 11 and described above can also be used with embodiments of the boltless illumination assembly 300 that include one or both of the first and second ring protrusions 359, 360 and the retainer ring 365. Moreover, in any of the embodiments described above, an external perimeter of the inset light fixture 310 and an internal perimeter of the base 320 may be threaded to allow for rotational and height adjustment of the inset light fixture 310 relative to the base 320 during installation.

In addition, it is to be understood that the present disclosure contemplates boltless attachment of any lighting fixture to any corresponding base. For example, the following inset and elevated light fixtures and bases are to be understood as included in but not limiting to the scope of disclosure: inset light bases, shallow inset light bases (e.g.

8 inch shallow inset light bases, 10 inch shallow inset light bases, and 12 inch shallow inset light bases), elevated light fixtures (e.g. runway or heliport perimeter lighting), load-bearing light bases, non-load-bearing light bases, and any other base to which an inset or elevated light fixture is configured to be mounted. The base can be installed in the ground, pavement (e.g. into a taxiway or runway), or any other subsurface location. Further, it is to be understood that the features comprising the boltless connection can be formed as an adapter to, for example, retrofit existing light fixtures and bases or can be formed as at least one of a separate and integral component of at least one of a light fixture and a base.

It will be apparent to those skilled in the art that various modifications and variations can be made without departing from the scope of the claimed invention.

## Claims

1. An illumination assembly for an airfield (300) comprising:
an airfield light fixture (310) comprising a housing (312) and at least one ring protrusion (359; 360) extending outward from the housing (312);
a base (320) having a ring groove (370); and
a C-shaped retaining ring (365) configured to fit within the ring groove (370),
wherein the at least one ring protrusion (359; 360) is configured to contact the C-shaped retaining ring (365) to attach the light fixture (310) to the base (320), and
wherein the light fixture (310) is configured to be connected to the base (320) without external bolts.

2. The illumination assembly (300) of claim 1, wherein the at least one ring protrusion (359; 360) comprises a first ring protrusion (359) arranged around an upper portion of the housing (312) and a second ring protrusion (360) that is spaced axially below the first ring protrusion (359).

3. The illumination assembly (300) of claim 2, wherein an intermediate portion of the housing (312) is located between the first ring protrusion (359) and the second ring protrusion (360) and is configured to receive the retaining ring (365).

4. The illumination assembly (300) of claim 1, wherein the retaining ring (365) is configured to selectively lock and unlock the light fixture (310) to the base (320).

5. The illumination assembly (300) of claim 1, wherein the light fixture (310) is a boltless inset light fixture (310).

6. The illumination assembly (300) of claim 1, wherein the light fixture (310) is a boltless elevated light fixture (310).

7. The illumination assembly (300) of claim 1, wherein the base (320) is configured to be mounted within pavement at or below a surface level of the pavement.

## Patentansprüche

1. Beleuchtungsanordnung für ein Flugfeld (300), umfassend:
eine Flugfeld-Leuchtenhalterung (310), umfassend ein Gehäuse (312) und mindestens einen Ringvorsprung (359; 360), der sich von dem Gehäuse (312) nach außen erstreckt;
einen Sockel (320) mit einer Ringnut (370); und
einen C-förmigen Haltering (365), der so konfiguriert ist, dass er in die Ringnut (370) passt,
wobei der mindestens eine Ringvorsprung (359; 360) so konfiguriert ist, dass er den C-förmigen Haltering (365) kontaktiert, um die Leuchtenhalterung (310) an dem Sockel (320) zu befestigen, und
wobei die Leuchtenhalterung (310) so konfiguriert ist, dass sie ohne externe Schrauben mit dem Sockel (320) verbunden werden kann.

2. Beleuchtungsanordnung (300) nach Anspruch 1, wobei der mindestens eine Ringvorsprung (359; 360) einen ersten Ringvorsprung (359), der um einen oberen Abschnitt des Gehäuses (312) herum angeordnet ist, und einen zweiten Ringvorsprung (360), der axial unter dem ersten Ringvorsprung (359) beabstandet ist, umfasst.

3. Beleuchtungsanordnung (300) nach Anspruch 2, wobei ein Zwischenabschnitt des Gehäuses (312) zwischen dem ersten Ringvorsprung (359) und dem zweiten Ringvorsprung (360) angeordnet und so konfiguriert ist, dass er den Haltering (365) aufnimmt.

4. Beleuchtungsanordnung (300) nach Anspruch 1, wobei der Haltering (365) so konfiguriert ist, dass er die Leuchtenhalterung (310) an dem Sockel (320) selektiv verriegelt und entriegelt.

5. Beleuchtungsanordnung (300) nach Anspruch 1, wobei die Leuchtenhalterung (310) eine Leuchtenhalterung mit schraubenlosem Einsatz (310) ist.

6. Beleuchtungsanordnung (300) nach Anspruch 1, wobei die Leuchtenhalterung (310) eine schraubenlose, erhöhte Leuchtenhalterung (310) ist.

7. Beleuchtungsanordnung (300) nach Anspruch 1, wobei der Sockel (320) so konfiguriert ist, dass er innerhalb des Belags auf oder unterhalb eines Oberflächenniveaus des Belags angebracht werden kann.

## Revendications

1. Ensemble d'éclairage pour un terrain d'aviation (300) comprenant :
un luminaire de terrain d'aviation (310) comprenant un logement (312) et au moins une protubérance annulaire (359 ; 360) s'étendant vers l'extérieur à partir du logement (312) ;
une base (320) ayant une rainure annulaire (370) ; et
une bague de retenue en forme de C (365) configurée pour s'ajuster au sein de la rainure annulaire (370),
dans lequel l'au moins une protubérance annulaire (359 ; 360) est configurée pour venir en contact avec la bague de retenue en forme de C (365) pour fixer le luminaire (310) à la base (320), et
dans lequel le luminaire (310) est configuré pour être relié à la base (320) sans boulons externes.

2. Ensemble d'éclairage (300) selon la revendication 1, dans lequel l'au moins une protubérance annulaire (359 ; 360) comprend une première protubérance annulaire (359) agencée autour d'une partie supérieure du logement (312) et une deuxième protubérance annulaire (360) qui est espacée axialement en dessous de la première protubérance annulaire (359).

3. Ensemble d'éclairage (300) selon la revendication 2, dans lequel une partie intermédiaire du logement (312) est située entre la première protubérance annulaire (359) et la deuxième protubérance annulaire (360) et est configurée pour recevoir la bague de retenue (365).

4. Ensemble d'éclairage (300) selon la revendication 1, dans lequel la bague de retenue (365) est configurée pour verrouiller et déverrouiller sélectivement le luminaire (310) par rapport à la base (320).

5. Ensemble d'éclairage (300) selon la revendication 1, dans lequel le luminaire (310) est un luminaire encastré sans boulon (310).

6. Ensemble d'éclairage (300) selon la revendication 1, dans lequel le luminaire (310) est un luminaire surélevé sans boulon (310).

7. Ensemble d'éclairage (300) selon la revendication 1, dans lequel la base (320) est configurée pour être montée dans une chaussée au niveau du, ou sous le, niveau de surface de la chaussée.
